(19) Europäisches Patentamt
European Patent Office
Office européen des brevets

(11) **EP 1 936 975 A1**

(12) **EUROPEAN PATENT APPLICATION**

(43) Date of publication:
**25.06.2008 Bulletin 2008/26**

(51) Int Cl.:
**H04N 5/913** (2006.01)

(21) Application number: **06301275.1**

(22) Date of filing: **20.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Bourdon, Pascal**
**92648, Boulogne Cedex (FR)**
• **Doyen, Didier**
**92648, Boulogne Cedex (FR)**
• **Kervec, Jonathan**
**92648, Boulogne Cedex (FR)**

(74) Representative: **Huchet, Anne**
**46, Quai Alphonse Le Gallo**
**92100 Boulogne Billancourt (FR)**

(54) **Method and device for processing source pictures to generate aliasing**

(57) The invention concerns a method for processing a sequence of source pictures to generate artifacts due to aliasing when these source pictures are captured by a video capturing device. This method comprises a first time modulation step for modulating temporally at a first modulation frequency ($f_{m1}$) the brightness of pixels of each picture of the sequence around a brightness to be displayed for said picture. According to an important feature of the invention, the method further comprises a sec-

ond time modulation step for modulating temporally at a second modulation frequency ($f_{m2}$) different from the first modulation frequency ($f_{m1}$) the brightness of pixels of each picture of the sequence around a brightness value to be displayed for said picture, the first and second modulation frequencies ($f_{m1},f_{m2}$) being determined in order not to be visible to the human eye and contributing to generate aliasing artifact at a predetermined aliasing frequency.

FIG.4

**Description**

Field of the invention

The present invention is in the field of content protection, most particularly in cinema venues where a camcorder acquisition followed by immediate illegal distribution creates important revenue losses for the content owners. More particularly, the invention relates to a method and a device for processing a sequence of source pictures to generate artifacts due to aliasing when these pictures are captured by a video capturing device. This method modifies the screened cinema pictures and defeat camcording opportunities in movie theaters without any incidence for the viewing human audience.

Background of the invention

Within this context, the patent application WO 05/027529 aims to combat the copying of source pictures by means of a camera while they are being displayed, for example using a camcorder in a movie theatre. In this document, it is proposed to generate, from each source picture of the sequence to be displayed, at least two successive processed pictures, in which the colour of at least one pixel in the processed pictures is modulated temporally around the colour of the pixel in the source picture and to display these processed pictures. The pixels whose colour is modified represent an anti-piracy pattern, for example the text "ILLEGAL COPY". The processed pictures are displayed at a high frequency that makes the pattern invisible to the human eye but visible in the sequence filmed by the camcorder. Such a solution requires a modulation of the colour of the pixels at a frequency higher than the colour flicker frequency, which is of around 10/20 Hz, and is applied to projection systems having a refresh frequency of at least 100 Hz. It is also possible to modulate the luminance or the brightness of the pixels instead of their colour and to use modulation frequencies which are not half of the refresh frequency of the projection system but the modulation frequency should be higher than the color flicker frequency (for a modulation in colour) or the luminance flicker frequency (for a modulation in luminance).
One drawback of such a method is that it requires a high modulation frequency in order to make the modulation effect invisible for legal audiences. So this modulation tends to be removed by the shutter integration of the video capturing device.

Invention

The principle of the invention is based on human eye's sensitivity to flicker and the way it relates to both flicker frequency and signal energy. It consists in modulating a video source in amplitude with at least two carrier waves to generate temporal aliasing artifacts on camcorder copies without disturbing direct vision for a human eye.
More particularly, the invention concerns a method for processing a sequence of source pictures to generate artifacts due to aliasing when said source pictures are captured by a video capturing device, said method comprising a first time modulation step for modulating temporally at a first modulation frequency the brightness of pixels of each picture of the sequence around a brightness to be displayed for said picture. According to the invention, it further comprises a second time modulation step for modulating temporally at a second modulation frequency different from the first modulation frequency the brightness of pixels of each picture of the sequence around a brightness value to be displayed for said picture, said first and second modulation frequencies being determined in order not to be visible to the human eye and contributing to generate aliasing artifact at a predetermined aliasing frequency.
The pixels whose brightness is modulated are pixels of the source pictures that used for displaying an anti-copy pattern.
In a first embodiment, all pixels of the anti-copy pattern are modulated by the first modulation frequency and the second modulation frequency.
In a second embodiment, a first part of the pixels of the anti-copy pattern are modulated by the first modulation frequency and a second part is modulated by the second modulation frequency.
In a third embodiment, the brightness of the pixels of the source pictures comprising a first component and a second component, the first component of pixels of source pictures is modulated at the first modulation frequency and the second component of pixels of source pictures is modulated at the second frequency. The first component is for example luminance and the second component is chrominance.
The invention concerns also a device for processing a sequence of source pictures to generate artifacts due to aliasing when said source pictures are captured by a video capturing device, said source pictures being received at a first refresh frequency and delivered at a second refresh frequency, comprising

- a frame duplicator for generating K pictures for each source picture, with K being the ratio between the second refresh frequency and the first refresh frequency,

- a first generator for generating carrier coefficients at the second frequency, said carrier coefficients following a sine curve having a first modulation frequency,
- a first multiplier circuit for multiplying a first non-zero modulation index with a first part of the carrier coefficients delivered by the first generator and zero with the other part of the carrier coefficients,
- a second generator for generating carrier coefficients at the second frequency, said carrier coefficients following a sine curve having a second modulation frequency,
- a second multiplier circuit for multiplying a second non-zero modulation index with a first part of the carrier coefficients delivered by the second generator and zero with the other part of the carrier coefficients,
- an adder circuit for adding together the values delivered by the first and second multiplier circuits and the value 1; and
- a third multiplier circuit for multiplying the value delivered by the adder circuit with the value of pixels of the duplicated pictures delivered by the frame duplicator.

The invention concerns also a device for processing a sequence of source pictures to generate artifacts due to aliasing when said source pictures are captured by a video capturing device, said source pictures being received at a first refresh frequency and delivered at a second refresh frequency, comprising

- a frame duplicator for generating K pictures for each source picture, with K being the ratio between the second refresh frequency and the first refresh frequency,
- a first generator for generating carrier coefficients at the second frequency, said carrier coefficients following a sine curve having a first modulation frequency,
- a first multiplier circuit for multiplying a first non-zero modulation index with the carrier coefficients delivered by the first generator,
- a second generator for generating carrier coefficients at the second frequency, said carrier coefficients following a sine curve having a second modulation frequency,
- a second multiplier circuit for multiplying a second non-zero modulation index with the carrier coefficients delivered by the second generator,
- a selector receiving at first input the values delivered by the first multiplier circuit, at a second input the value 0 and at a third input the values delivered by the second multiplier circuit and delivering the values present at its first input if the current pixel belongs to a first predefined set of pixels, the value present at its third input if the current pixel belongs to a second predefined set of pixels different from the first set and otherwise the value 0;
- an adder circuit for adding together the values delivered by the selector and the value 1; and
- a third multiplier circuit for multiplying the value delivered by the adder circuit with the value of pixels of the duplicated pictures delivered by the frame duplicator.

The invention concerns also a device for processing a sequence of source pictures to generate artifacts due to aliasing when said source pictures are captured by a video capturing device, said source pictures being received at a first refresh frequency and delivered at a second refresh frequency, characterized in that it comprises

- a frame duplicator for generating K pictures for each source picture, with K being the ratio between the second refresh frequency and the first refresh frequency;
- a first generator for generating carrier coefficients at the second frequency, said carrier coefficients following a sine curve having a first modulation frequency;
- a first multiplier circuit for multiplying a first non-zero modulation index with a first part of carrier coefficients delivered by the first generator and zero with the other part of the carrier coefficients;
- a first adder circuit for adding together the values delivered by the first multiplier circuit and the value 1;
- a second generator for generating carrier coefficients at the second frequency; said carrier coefficients following a sine curve having a second modulation frequency;
- a second multiplier circuit for multiplying a second non-zero modulation index with a first part of carrier coefficients delivered by the second generator and zero with the other part of the carrier coefficients;
- a second adder circuit for adding together the values delivered by the second multiplier circuit and the value 1;
- a third multiplier circuit for multiplying the value delivered by the first adder circuit with the luminance value of the pixels of the pictures delivered by the frame duplicator; and
- a fourth multiplier circuit for multiplying the value delivered by the second adder circuit with the chrominance value of the pixels of the pictures delivered by the frame duplicator.

Brief description of the drawings

Exemplary embodiments of the invention are illustrated in the drawings and are explained in more detail in the following description. In the drawings :

Fig.1    is a graphical representation of a video signal recorded by a camcorder (equivalent to a function sinc(πfT) with a shutter speed set to $\dfrac{1}{T} = \dfrac{1}{50}$ ;

Fig.2    shows the human observer's perception of time-varying light emissions depending on retina excitation, flicker frequency and modulation index;

Fig.3    illustrates the sensitivity of a human eye to color flicker;

Fig.4    represents a first circuit implementation of the invention;

Fig.5    represents a second circuit implementation of the invention; and

Fig.6    represents a third circuit implementation of the invention.

## DESCRIPTION OF PREFERRED EMBODIMENTS

First of all, in order to better understand the invention, a mathematical modelization of a camcorder device is proposed. The signal m(t) designates the signal representative of the light-induced charges entering and being integrated by a sensor cell of a CCD/CMOS array of the camcorder device. The integration time of this signal is determined by the electronic shutter of the camcorder, which turns out to be the start/stop signal commanding the integration process of the sensor array. If T is the integration time, the output electrical signal of a sensor cell $m_{shut}$ (t) is:

$$m_{shut}(t) = \int_{t-T}^{t} m(\tau)d\tau \qquad (1)$$

The signal $m_{shut}(t)$ is then sampled for storage purposes. It has to be noted that the shutter command signals' periodicity is most likely synchronized to the sampling process, especially when using CCD sensor arrays, which readout process involves a complete initialization of their photocells. The dual integration-sampling process of the signal x(t) can be modelized as follows:

$$m_{rec}(t) = \sum_{n=-\infty}^{+\infty}\left[\int_{t-T}^{t} m(\tau)d\tau\right].\delta(t-nT_s) \qquad (2)$$

Where

-    $m_{rec}$ (t) is the signal recorded by the camcorder, and
-    $T_s$ is the sampling time (e.g. $T_s$ = 1/50 second for PAL-interlaced, $T_s$ = 1/25 second for PAL-progressive, $T_s$ =1/60 second for NTSC-interlaced, etc...).

Based on this mathematical model of the signal recorded by the camcorder and common knowledge about human vision, to generate disturbing aliasing artifacts on a camcorder acquisition, a video signal has to satisfy the following constraints:

-    The bandwidth of the signal to be recorded has to be high enough to violate the Nyquist-Shannon sampling theorem. If F is the signal's bandwidth and $F_s$ is the sampling frequency of the camcorder ($F_s$ = 1/$T_s$), it means that F > $F_s$ / 2 ;

-    Aliasing artifacts have to be visible on the camcorder. If $f_a$ is an aliasing frequency, would it be flickering ($f_a \neq 0$) or not ($f_a$ = 0), and if CFF is the Critical Flicker Frequency threshold above which a flickering light is indistinguishable from a steady, non-flickering light for a human eye), it means that $f_a$ < CFF ;

-    The modulated video signal has to look exactly the same as the original one for the legal audience. If $f_m$ is the modulation frequency, it means that $f_m$ > CFF ;

-    Modulation frequency should be preferably located outside low gain areas on the shutter spectrum.

Shutter spectrum and aliasing frequencies can be determined using the Fourier transform of the equation (2):

$$F[m_{rec}(t)] = F\left[\sum_{n=-\infty}^{+\infty}\left[\int_{t-T}^{t}m(\tau)d\tau\right].\delta(t-nT_s)\right]$$

$$= F\left[\left[\int_{t-T}^{t}m(\tau)d\tau\right].\sum_{n=-\infty}^{+\infty}.\delta(t-nT_s)\right]$$

$$= F\left[\int_{t-T}^{t}m(\tau)d\tau\right] * F\left[\sum_{n=-\infty}^{+\infty}\delta(t-nT_s)\right] \qquad (3)$$

$$= \left(\underbrace{M(f).T\,sinc(\pi fT).e^{-j\pi fT}}_{term1}\right) * \underbrace{F_s\sum_{n=-\infty}^{+\infty}\delta(f-nF_s)}_{term2}$$

Where

- term1 represents the cardinal sine low pass filtering operation induced by the shutter integration, and
- term2 is the periodization of the resulting spectrum (period = Fs) induced by the sampling process.

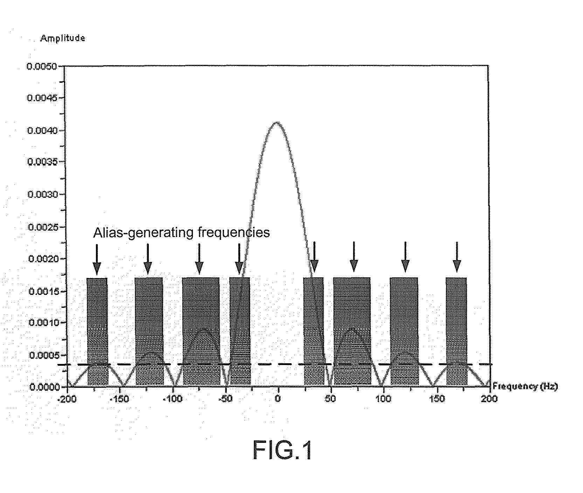

Figure 1 shows a graphical representation of the function $sinc(\pi fT)$ with a shutter speed set to $\dfrac{1}{T} = \dfrac{1}{50}$ (which is the default mode for PAL-interlaced camcorders). The abrupt truncation of light integration by CCD/CMOS array sensors command signals introduces severe sidelobe effects during the low pass filtering process, meaning, despite the low pass behaviour of this filter, that spectral content over the $\dfrac{1}{T}$ cutoff limit can pass through the shutter. Sidelobe peaks of the cardinal sine function can be determined using the following table.

| Sidelobe | Peak location | Peak location in Hz | Peak value |
|---|---|---|---|
| Main lobe | x = 0 | f = 0 | \|sinc(x)\| =1 |
| 1st | x = ±4.4934095 | $f = \pm\dfrac{4.4934095}{\pi T}$ | \|sinc(x)\| = 0.2172336 |
| 2nd | x = ±7.7252518 | $f = \pm\dfrac{7.7252518}{\pi T}$ | \|sinc(x)\| = 0.1283746 |
| 3rd | x = ±10.904122 | $f = \pm\dfrac{10.904122}{\pi T}$ | \|sinc(x)\| = 0.0913252 |

The alias generating frequencies satisfying the constraints given previously are identified in the figure 1 by black areas. These frequencies are located around the sidelobe peaks (highest shutter gain areas) in the $[25,\infty[$Hz frequency band (Shannon-Nyquist theorem violation).

An alias-generating video signal, noted $m_{MOD}(t)$, can be obtained by adding one harmonic to the original video signal m(t) which frequency $f_m$ is over the Shannon limit and inside non-null areas of the shutter spectrum:

$$m_{MOD}(t) = m(t) + A\cos(2\pi f_m t) \qquad (4)$$

Of course the equation (4) has to be modified to deal with physical constraints, such as non-negative light emissions:

$$
\begin{aligned}
&m_{MOD}(t) \geq 0 \\
&\Rightarrow m(t) + A\cos(2\pi f_m t) \geq 0 \\
&\Rightarrow \min\big[m(t) + A\cos(2\pi f_m t)\big] = 0 \qquad (5) \\
&\Rightarrow m(t) - \max[A] = 0 \quad (m(t) > 0) \\
&\Rightarrow \max[A] = m(t)
\end{aligned}
$$

In other words, to generate the maximum aliasing effects physically possible, the signal $m_{MOD}(t)$ must be defined as:

$$
\begin{aligned}
&m_{MOD}(t) = m(t) + m(t)\cos(2\pi f_m t) \\
&\Rightarrow m_{MOD}(t) = m(t)(1 + \cos(2\pi f_m t))
\end{aligned}
\qquad (6)
$$

The equation (6) is the expression of an amplitude-modulated (AM) signal, with the original signal m(t) being added to the modulated spectrum $m(t)\cos(2\pi f_m t)$, to be opposed to classical AM schemes in transmission where only the carrier wave $\cos(2\pi f_m t)$ can be added to the modulated signal to avoid carrier regeneration on reception before the demodulation process.

Despite the fact that the amplitude modulation process depicted by equation (6) has been used in many methods to counter piracy attempts in movie theatres, it appears to be very restrictive. In order to make the modulation effect invisible for legal audiences, such methods usually propose modulation frequencies being so high that they tend to be completely removed by shutter integration. An alternative is to use lower frequencies with lower modulation indices or to use chrominance-only modulation to make the effect invisible at such frequencies, alas the resulting artefacts tend to be almost invisible as well.

According to the invention, in order to have a modulation effect which is strong enough to generate aliasing artefacts yet invisible enough for the audience not to be disturbed, it is proposed to use a multi-carrier modulation scheme, based on at least two modulation frequencies $f_{m1}$ and $f_{m2}$, instead of using a single-carrier modulation scheme as used up to now. The first frequency $f_{m1}$ (the lowest frequency) allows to introduce as much effect as possible for a low flicker rate and goes through significant shutter gains (for example, over -12 dB). The second frequency $f_{m2}$ allows generating even more disturbance with the remaining bits of signal energy. The alias-generating video signal is now :

$$m_{MOD}(t) = m(t) + A1\cos(2\pi f_{m1} t) + A2\cos(2\pi f_{m2} t) \qquad (7)$$

With the non-negative light emissions constraint, it leads to the following equation (8):

$$m_{MOD}(t) \geq 0$$

$$\Rightarrow m(t) + A1\cos(2\pi f_{m1}t) + A2\cos(2\pi f_{m2}t) \geq 0$$

$$\Rightarrow \min[m(t) + A1\cos(2\pi f_{m1}t) + A2\cos(2\pi f_{m2}t)] = 0 \qquad .$$

$$\Rightarrow m(t) - \max[A1 + A2] = 0 \quad (m(t) > 0)$$

$$\Rightarrow \max[A1 + A2] = m(t)$$

$$\Rightarrow m_{MOD}(t) = m(t)(1 + \alpha\cos(2\pi f_{m1}t) + (1-\alpha)\cos(2\pi f_{m2}t)) \qquad (8)$$

where $\alpha \in [0,1]$ is a constant that allows to split the modulation energy between the two frequencies $f_{m1}$ and $f_{m2}$ .

The two modulation frequencies $f_{m1}$ and $f_{m2}$ are selected to contribute to generate aliasing at a predetermined frequency $f_a$.

In a first embodiment, all pixels of the anti-copy pattern to be introduced in the source pictures are modulated by two modulation frequencies $f_{m1}$ and $f_{m2}$.

In a second embodiment, a first part of the pixels of the anti-copy pattern to be introduced in the source pictures are modulated by the modulation frequency $f_{m1}$ and a second part of the pixels of the anti-copy pattern (different from the first part) are modulated by the modulation frequency $f_{m2}$ .

In a third embodiment, the luminance of the pixels of the anti-copy pattern to be introduced in the source pictures is modulated at the first modulation frequency and the chrominance of these pixels is modulated at the second frequency.

Different ways are proposed hereinafter to select the modulation frequencies to be used and the corresponding modulation indices

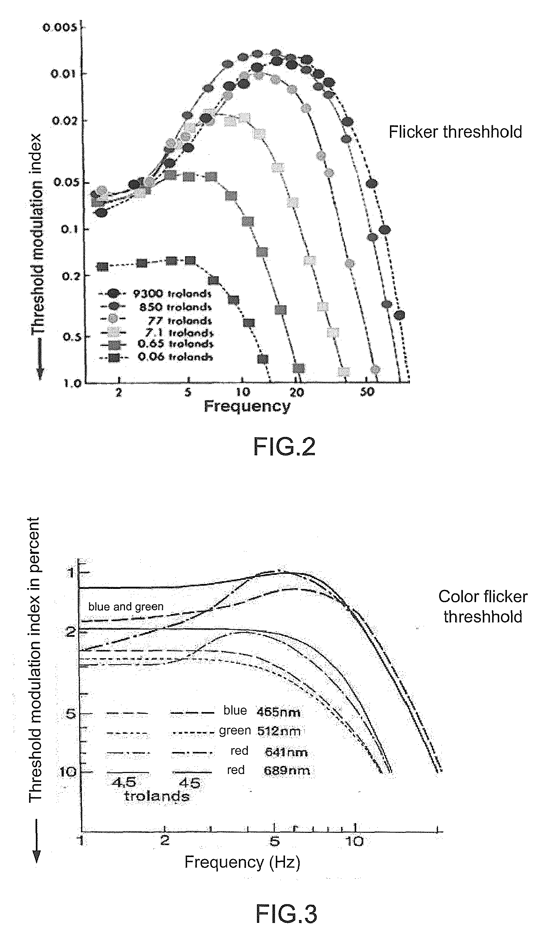

In a first way, it is proposed to split the global light energy signal around two carrier waves by adjusting modulation indices. Figure 2 shows Kelly's Temporal Contrast Sensitivity (TCS) function for various adapting fields. As it can be seen on this figure, a human observer's perception of time-varying light emissions highly depends on specific conditions regarding the retina excitation (expressed in trolands), the flicker frequency or light variation cycles per second (horizontal axis) and the modulation index (vertical axis) of the signal. For a given retina excitation, the time-varying light emissions are perceived in the domain located under the corresponding curve. This figure is used to determine the modulation index to be applied to the lowest modulation frequency $f_{m1}$.

Based on the equation (3), the harmonic frequencies $f_{m1}$ and $f_{m2}$ generating aliasing artifacts on the frequency $f_a$ can be written as $f_{m1} = \|f_a + n_1 F_s\|$ and $f_{m2} = \|f_a + n_2 F_s\|$, where $n_1$ and $n_2$ are integers. For example, for generating a visible 15Hz alias/flicker effect over a PAL-interlaced camcorder with a 1/50 shutter speed, the best candidates could be:

$$f_{m1} = 35Hz \quad (n_1 = -1)$$

$$f_{m2} = 65Hz \quad (n_2 = +1)$$

These frequencies are not filtered out by shutter integration (see figure 1). So, the modulated signal can be written as follows:

$$m_{MOD}(t) = m(t)(1 + \underbrace{\alpha_1\cos(2\pi f_{m1}t)}_{\text{carrier 1}} + \underbrace{\alpha_2\cos(2\pi f_{m2}t + \pi)}_{\text{carrier 2}})) \qquad (9)$$

with $f_{m1}$ = 35Hz and $f_{m2}$ = 65Hz and $\alpha_2$ = 1-$\alpha_1$

The phase opposition (+$\pi$) on the carrier 2 allows to cancel the $e^{-j\pi fT}$-induced phase opposition between odd and even lobes on the shutter spectrum (see equation (3)). The modulation indices $\alpha_1$ and $\alpha_2$ are carefully chosen in order to match with figure 2 to ensure invisibility to the audience. As an example, for a retina excitation of 7.1 trolands, the coefficients are

$$\alpha_1 \approx 0.2$$

$$\alpha_2 = 1 - \alpha_1 \approx 0.8$$

Although these will most likely be set exploiting actual psychophysical tests, since Figure 2 is unlikely to be representative of human perception in a movie theater, which has different vision conditions than those used during flicker sensitivity tests.

In this way, this multi-carrier modulation scheme is to be applied to either one or several components of the video signal in the XYZ color space, as long as modulation indices ensure that every modulated value is located inside the gamut of the display device.

Another possibility to split modulation signal energy into two different carrier waves can be a dual component modulation, for example a chrominance-luminance modulation. It has been demonstrated that human perception of flickering light highly depends on whether this light is stimulating all retinal cones or just a selected range as illustrated by Figure 3. Figure 3 shows the sensitivity of a human eye to color flicker. More particularly, Figure 3 shows the threshold modulation indices for two retina excitations (4,5 trolands and 45 trolands), for 4 colors (blue 455 nm, green 512 nm, red 641 nm, red 689 nm) and for a modulation frequency range [1 Hz,20Hz]. For a given retina excitation, a given color and a given modulation frequency, the modulation index must be above the corresponding sensitivity curve (the modulation is lower than the modulation index given by the curve) to ensure invisibility of the flicker in the movie theater.

As a result, an alternative to the first embodiment is a dual chrominance-luminance modulation system, where a chrominance (X and Z components in the XYZ color space) flicker effect is generated using the first carrier frequency $f_{m1} = 35Hz$ , and the remaining luminance dynamic (Y component) is modulated using the second carrier frequency $f_{m2}$ = 65Hz.

In this case, we have

$$m_{MOD}(t) = \begin{bmatrix} X(t).(1 + A1\cos(2\pi f_{m1}t)) \\ Y(t).(1 + A2\cos(2\pi f_{m2}t)) \\ Z(t).(1 + A3\cos(2\pi f_{m1}t)) \end{bmatrix}$$

where A1, A2 and A3 are modulation indices that are carefully selected to make sure that all modulated vectors are in the display device gamut. For a given modulation frequency, a given color and a given retina excitation, a valid modulation index A is located over the corresponding sensitivity curve of the Figure 3. Furthermore, another condition is to make sure that all selected XYZ vectors from X(1-A1) to X(1+A1), Y(1-A2) to Y(1 +A2) and Z(1-A3) to Z(1 +A3) are located inside the display gamut.

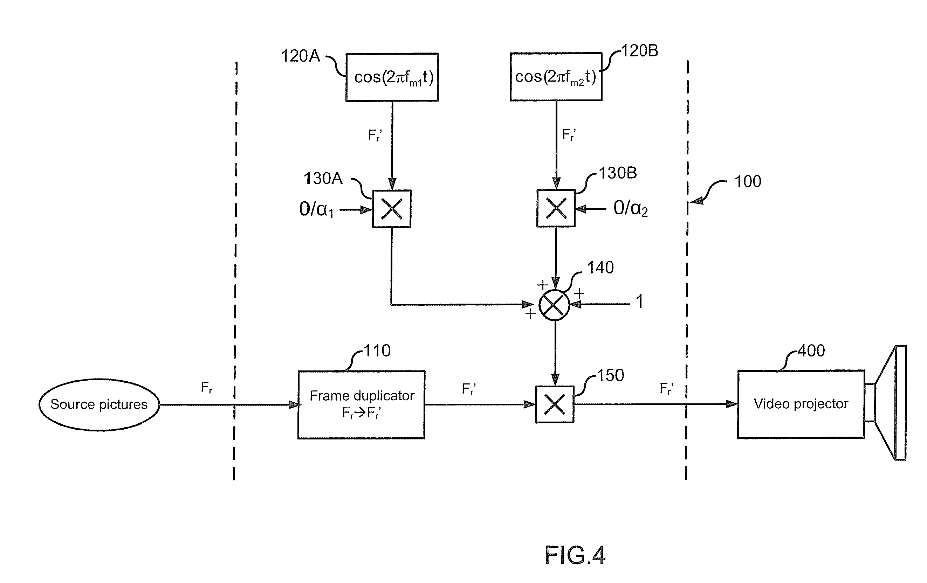

Figures 4, 5 and 6 are block diagrams of three exemplary circuit implementations of the inventive method.

Figure 4 shows a device 100 for implementing the inventive method where all the pixels of the anti-copy pattern (for example ILLEGAL COPY) are modulated by both modulation frequencies $f_{m1}$ and $f_{m2}$. The device 100 receives source pictures and delivers output pictures to a video projector 400 working at a refresh frequency $F_r'$ (=144 Hz for example). The source pictures are received at a refresh frequency $F_r$ (=24 Hz for example). The device comprises:

- a frame duplicator 110 for generating K pictures for each source picture, with K = $F_r'/F_r$,
- a first generator 120A for generating carrier coefficients at a frequency $F_r'$ ; these carrier coefficients of type cos $(2\pi f_{m1}t)$ are computed previously and stored in a look-up table;
- a first multiplier circuit 130A for multiplying the modulation index $\alpha_1$ with each carrier coefficient delivered by the generator 120A; the modulation index $\alpha_1$ is a value predefined as mentioned previously and stored in a memory circuit; this non-zero value $\alpha_1$ is used for the pixels of the source pictures that must be modulated (= pixels of the anti-copy pattern) and the value 0 is used for the other pixels (= no modulation);
- a second generator 120B for generating carrier coefficients at a frequency $F_r'$; these carrier coefficients of type cos $(2\pi f_{m2}t)$ are computed previously and stored in a look-up table;
- a second multiplier circuit 130B for multiplying the modulation index $\alpha_2$ with each carrier coefficient delivered by the generator 120B; the modulation index $\alpha_2$ is a value predefined as mentioned previously and stored in a memory circuit; this non-zero value $\alpha_2$ is used for the pixels of the source pictures that must be modulated (= pixels of the anti-copy pattern) and the value 0 is used for the other pixels (=no modulation);

- an adder circuit 140 for adding together the values delivered by the multiplier circuits 130A and 130B and the value 1; and
- a third multiplier circuit 150 for multiplying the value delivered by the adder circuit 140 with the value of the pixels of the duplicated pictures delivered by the frame duplicator 110; the part of the pixels for which the modulation index $\alpha_1$ or $\alpha_2$ is not zero (= pixels of the anti-copy pattern) are modulated at the modulation frequencies $fm_1$ and $fm_2$; the other pixels are not modulated; the output pictures are provided to the video projector 400.

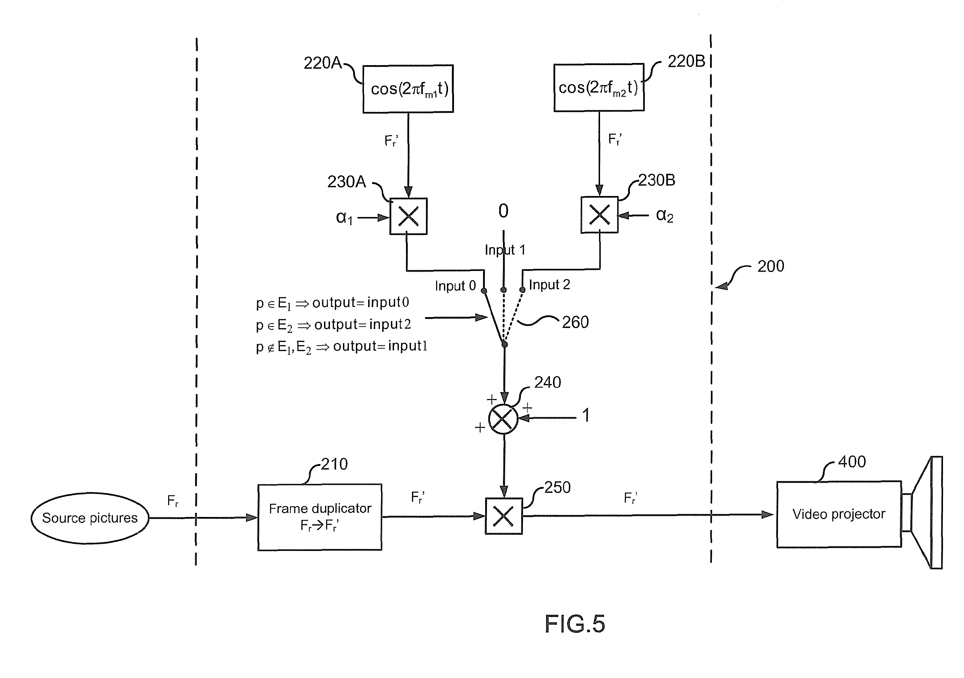

Figure 5 shows a device 200 for implementing the inventive method where a part of pixels of the anti-copy pattern, the pixels belonging to a set $E_1$, are modulated at the modulation frequency $f_{m1}$ and the remaining pixels of the anti-copy pattern are modulated at the modulation frequency $f_{m2}$. The device 200 receives source pictures and delivers output pictures to a video projector 400 working at a refresh frequency $F_r'$ (=144 Hz for example). The source pictures are received at a refresh frequency $F_r$. The device comprises:

- a frame duplicator 210 for generating K pictures for each source picture, with $K = F_r' / F_r$ ,
- a first generator 220A for generating carrier coefficients at a frequency $F_r'$; these carrier coefficients of type cos $(2\pi f_{m1}t)$ are computed previously and stored in a look-up table;
- a first multiplier circuit 230A for multiplying the modulation index $\alpha_1$ with each carrier coefficient delivered by the generator 220A; the modulation index $\alpha_1$ is a value predefined as mentioned previously and stored in a memory circuit; this non-zero value $\alpha_1$ is used for a first part $E_1$ of the pixels of the source pictures that must be modulated (= a first part of the pixels of the anti-copy pattern);
- a second generator 220B for generating carrier coefficients at a frequency $F_r'$; these carrier coefficients of type cos $(2\pi f_{m2}t)$ are computed previously and stored in a look-up table;
- a second multiplier circuit 230B for multiplying the modulation index $\alpha_2$ with each carrier coefficient delivered by the generator 120B; the modulation index $\alpha_2$ is a value predefined as mentioned previously and stored in a memory circuit; this non-zero value $\alpha_2$ is used for a second part $E_2$ (different from the first part $E_1$) of the pixels of the source pictures that must be modulated (= a second part of the pixels of the anti-copy pattern);
- a selector 260 receiving at an input 0 the values delivered by the multiplier circuit 230A, at an input 1 the value 0 and at an input 2 the values delivered by the multiplier circuit 230B; if the current pixel p belongs to the predefined set $E_1$, the selector delivers the value present at its input 0; if the current pixel p belongs to the predefined set $E_2$, the selector delivers the value present at its input 2 and otherwise it delivers the value 0 present at its input 1;
- an adder circuit 240 for adding together the values delivered by the selector 260 and the value 1; and
- a third multiplier circuit 250 for multiplying the value delivered by the adder circuit 240 with the value of the pixels of the duplicated pictures delivered by the frame duplicator 210; thus the pixels belonging to the set $E_1$ are modulated at the frequency $fm_1$, the pixels belonging to the set $E_2$ are modulated at the frequency $fm_2$ and the other pixels are not modulated; the pixels of the output pictures are provided to the video projector 400.

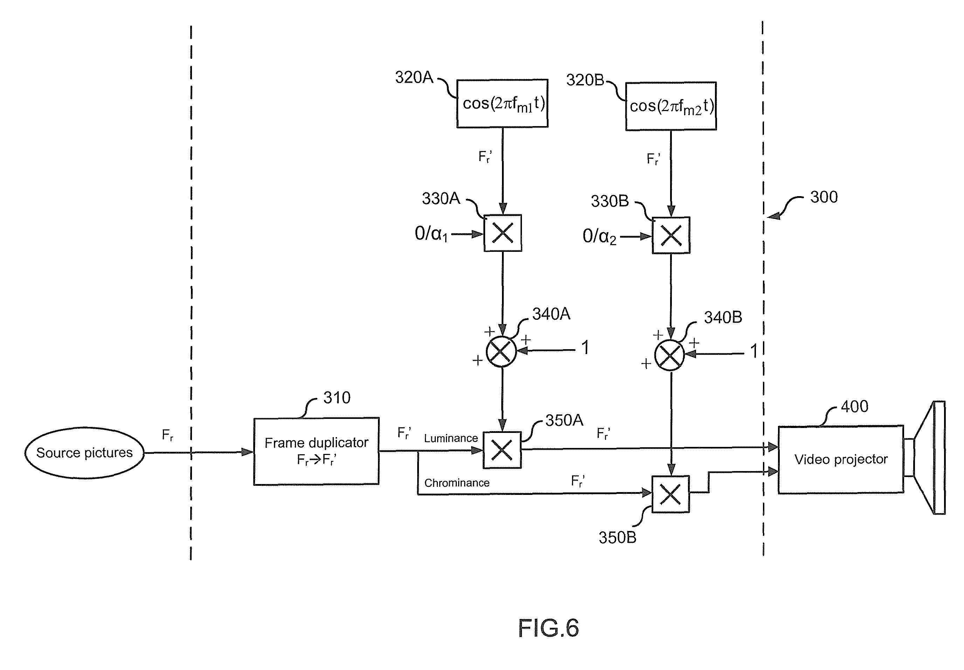

In Figures 5 and 6, the brightness of the anti-copy pattern pixels of the pictures is modulated. It can be either the luminance or the chrominance of the pixels. Figure 6 proposes a circuit implementation where the luminance of the anti-copy pattern pixels is modulated at a first frequency and the chrominance of these pixels is modulated at a second modulation frequency.

Figure 6 shows a device 300 receiving source pictures and delivering output pictures to a video projector 400 working at a refresh frequency $F_r'$ (=144 Hz for example). The source pictures are received at a refresh frequency $F_r$. The device comprises:

- a frame duplicator 310 for generating K pictures for each source picture, with $K = F_r' / F_r$; a first output of the duplicator delivers the luminance signal of these pictures and a second output delivers the chrominance signal of these pictures;
- a first generator 320A for generating carrier coefficients at a frequency $F_r'$; these carrier coefficients of type cos $(2\pi f_{m1}t)$ are computed previously and stored in a look-up table;
- a first multiplier circuit 330A for multiplying the modulation index $\alpha_1$ with each carrier coefficient delivered by the generator 320A; the modulation index $\alpha_1$ is a value predefined as mentioned previously and stored in a memory circuit; this non-zero value $\alpha_1$ is used for the pixels of the source pictures that must be modulated (= pixels of the anti-copy pattern) and the value 0 is used for the other pixels (= no modulation);
- a first adder circuit 340A for adding together the values delivered by the multiplier circuit 330A and the value 1;
- a second generator 320B for generating carrier coefficients at a frequency $F_r'$; these carrier coefficients of type cos $(2\pi f_{m2}t)$ are computed previously and stored in a look-up table;
- a second multiplier circuit 330B for multiplying the modulation index $\alpha_2$ with each carrier coefficient delivered by the generator 120B; the modulation index $\alpha_2$ is a value predefined as mentioned previously and stored in a memory circuit; this non-zero value $\alpha_2$ is used for the pixels of the source pictures that must be modulated (= pixels of the anti-copy pattern) and the value 0 is used for the other pixels (= no modulation);

- a second adder circuit 340B for adding together the values delivered by the multiplier circuit 330B and the value 1;
- a third multiplier circuit 350A for multiplying the value delivered by the adder circuit 340A with the luminance value of the pixels of the duplicated pictures delivered by the frame duplicator 210; the resulting signal is provided to the video projector 400; and
- a fourth multiplier circuit 350B for multiplying the value delivered by the adder circuit 340B with the chrominance value of the pixels of the duplicated pictures delivered by the frame duplicator 210; the resulting signal is provided to the video projector 400.

Of course, the scope of the present invention is not limited to the embodiments described hereinabove. More particularly, other values of refresh frequencies $F_r$' and $F_r$' or modulation frequencies $fm_i$ can be used. More than two modulation frequencies can be used. The different embodiments can also be combined.

**Claims**

1.  Method for processing a sequence of source pictures to generate artifacts due to aliasing when said source pictures are captured by a video capturing device, said method comprising a first time modulation step for modulating temporally at a first modulation frequency ($f_{m1}$) the brightness of pixels of each picture of the sequence around a brightness to be displayed for said picture,
    wherein it further comprises a second time modulation step for modulating temporally at a second modulation frequency ($f_{m2}$) different from the first modulation frequency ($f_{m1}$) the brightness of pixels of each picture of the sequence around a brightness value to be displayed for said picture, said first and second modulation frequencies ($f_{m1},f_{m2}$) being determined in order not to be visible to the human eye and contributing to generate aliasing artifact at a predetermined aliasing frequency.

2.  Method according to claim 1, wherein at least one pixel the brightness of which modulated at the first modulation frequency is a pixel the brightness of which is modulated at the second modulation frequency.

3.  Method according to claim 1, wherein at least one pixel of the source pictures is modulated at the first modulation frequency and at least one other pixel of the source pictures is modulated at the second modulation frequency.

4.  Method according to claim 1, wherein the brightness of the pixels of the source pictures comprising a first component and a second component, the first component of pixels of source pictures is modulated at the first modulation frequency and the second component of pixels of source pictures is modulated at the second frequency.

5.  Method according to claim 4, wherein the first component is luminance and the second component is chrominance.

6.  Method according to any one of the preceding claims, wherein, for a given sampling frequency $F_s$ of the video capturing device and an aliasing frequency $f_a$, the first frequency and the second frequency are selected to be equal to $\|f_a \pm n_1 F_s\|$ and $\|f_a \pm n_2 F_s\|$, $n_1$ and $n_2$ being two different integers.

7.  Device for processing a sequence of source pictures to generate artifacts due to aliasing when said source pictures are captured by a video capturing device, said source pictures being received at a first refresh frequency ($F_r$) and delivered at a second refresh frequency ($F_r$'), **characterized in that** it comprises

    - a frame duplicator (110) for generating K pictures for each source picture, with K being the ratio between the second refresh frequency and the first refresh frequency (K = $F_r$'/ $F_r$ ),
    - a first generator (120A) for generating carrier coefficients at the second frequency ($F_r$'), said carrier coefficients following a sine curve having a first modulation frequency ($f_{m1}$),
    - a first multiplier circuit (130A) for multiplying a first non-zero modulation index ($\alpha_1$) with a first part of the carrier coefficients delivered by the first generator (120A) and zero with the other part of the carrier coefficients,
    - a second generator (120B) for generating carrier coefficients at the second frequency ($F_r$'), said carrier coefficients following a sine curve having a second modulation frequency ($f_{m2}$),
    - a second multiplier circuit (130B) for multiplying a second non-zero modulation index ($\alpha_2$) with a first part of the carrier coefficients delivered by the second generator (120B) and zero with the other part of the carrier coefficients,

- an adder circuit (140) for adding together the values delivered by the first and second multiplier circuits (130A, 130B) and the value 1; and
- a third multiplier circuit (150) for multiplying the value delivered by the adder circuit (140) with the value of pixels of the duplicated pictures delivered by the frame duplicator (110).

**8.** Device for processing a sequence of source pictures to generate artifacts due to aliasing when said source pictures are captured by a video capturing device, said source pictures being received at a first refresh frequency ($F_r$) and delivered at a second refresh frequency ($F_r'$), **characterized in that** it comprises

- a frame duplicator (210) for generating K pictures for each source picture, with K being the ratio between the second refresh frequency and the first refresh frequency ($K = F_r' / F_r$),
- a first generator (220A) for generating carrier coefficients at the second frequency ($F_r'$), said carrier coefficients following a sine curve having a first modulation frequency ($f_{m1}$),
- a first multiplier circuit (230A) for multiplying a first non-zero modulation index ($\alpha_1$) with the carrier coefficients delivered by the first generator (220A),
- a second generator (220B) for generating carrier coefficients at the second frequency ($F_r'$), said carrier coefficients following a sine curve having a second modulation frequency ($f_{m2}$),
- a second multiplier circuit (230B) for multiplying a second non-zero modulation index ($\alpha_2$) with the carrier coefficients delivered by the second generator (220B),
- a selector (260) receiving at first input (input 0) the values delivered by the first multiplier circuit (230A), at a second input (input 1) the value 0 and at a third input (input 2) the values delivered by the second multiplier circuit (230B) and delivering the values present at its first input if the current pixel belongs to a first predefined set of pixels ($E_1$), the value present at its third input if the current pixel belongs to a second predefined set of pixels ($E_2$) different from the first set ($E_1$) and otherwise the value 0;
- an adder circuit (240) for adding together the values delivered by the selector (260) and the value 1; and
- a third multiplier circuit (250) for multiplying the value delivered by the adder circuit (240) with the value of pixels of the duplicated pictures delivered by the frame duplicator (210).

**9.** Device for processing a sequence of source pictures to generate artifacts due to aliasing when said source pictures are captured by a video capturing device, said source pictures being received at a first refresh frequency ($F_r$) and delivered at a second refresh frequency ($F_r'$), **characterized in that** it comprises

- a frame duplicator (310) for generating K pictures for each source picture, with K being the ratio between the second refresh frequency and the first refresh frequency ($K = F_r' / F_r$);
- a first generator (320A) for generating carrier coefficients at the second frequency ($F_r'$), said carrier coefficients following a sine curve having a first modulation frequency ($f_{m1}$);
- a first multiplier circuit (330A) for multiplying a first non-zero modulation index ($\alpha_1$) with a first part of carrier coefficients delivered by the first generator (320A) and zero with the other part of the carrier coefficients;
- a first adder circuit (340A) for adding together the values delivered by the first multiplier circuit (330A) and the value 1;
- a second generator (320B) for generating carrier coefficients at the second frequency ($F_r'$); said carrier coefficients following a sine curve having a second modulation frequency ($f_{m2}$);
- a second multiplier circuit (330B) for multiplying a second non-zero modulation index ($\alpha_2$) with a first part of carrier coefficients delivered by the second generator (320B) and zero with the other part of the carrier coefficients;
- a second adder circuit (340B) for adding together the values delivered by the second multiplier circuit (330B) and the value 1;
- a third multiplier circuit (350A) for multiplying the value delivered by the first adder circuit (340A) with the luminance value of the pixels of the pictures delivered by the frame duplicator (210); and
- a fourth multiplier circuit (350B) for multiplying the value delivered by the second adder circuit (340B) with the chrominance value of the pixels of the pictures delivered by the frame duplicator (210).

FIG.1

Flicker threshhold

FIG.2

Color flicker
threshhold

FIG.3

FIG.4

FIG.5

FIG.6

EP 1 936 975 A1

**European Patent Office**

## EUROPEAN SEARCH REPORT

Application Number

EP 06 30 1275

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 372 342 A (SONY CORP [JP]) 17 December 2003 (2003-12-17) * abstract * | 1,2 | INV. H04N5/913 |
| Y | * paragraph [0001] - paragraph [0018] * * paragraph [0026] - paragraph [0047] * | 7,9 | |
| A | * paragraph [0055] - paragraph [0056] * * paragraph [0061] - paragraph [0072] * * paragraph [0093] - paragraph [0100] * * figures 1-17 * ----- | 3-6,8 | |
| X | EP 1 237 369 A (EASTMAN KODAK CO [US]) 4 September 2002 (2002-09-04) | 1-6 | |
| Y | * abstract * * paragraph [0001] * * paragraph [0032] - paragraph [0036] * | 7,8 | |
| A | * paragraph [0059] - paragraph [0064] * * paragraph [0071] - paragraph [0080] * * paragraph [0114] * * paragraph [0118] * * paragraph [0120] * * paragraph [0124] - paragraph [0126] * * figures 1-28 * ----- | 9 | TECHNICAL FIELDS SEARCHED (IPC) H04N G06T |
| Y | "Operating Manual Arbitrary and Function Generator R&S AM 300"[Online] February 2005 (2005-02), page 1-34,1-35,6-134 - 6-144, XP002431351 Retrieved from the Internet: URL:http://www.rohde-schwarz.de/WWW/DownCe nt.nsf/file/AM300_BH_GB_V3_02-2005.pdf/$fi le/AM300_BH_GB_V3_02-2005.pdf> [retrieved on 2007-04-25] * page 34 * * page 134 - page 144 * ----- -/-- | 7-9 | |

The present search report has been drawn up for all claims

| Place of search | Date of completion of the search | Examiner |
|---|---|---|
| Munich | 27 April 2007 | Schreib, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 30 1275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "Software Manual Waveform Composer Software R&S AM300-K2" [Online] February 2004 (2004-02), XP002431352 Retrieved from the Internet: URL:http://www.rohde-schwarz.de/WWW/DownCent.nsf/file/AM300_K2_BH_D_3.pdf/$file/AM300_K2_BH_D_3.pdf> [retrieved on 2007-04-25] * page 6 * * page 25 * * page 30 * * page 33 * * page 36 - page 37 * ----- | 7-9 | |
| A | WO 01/56279 A (SARNOFF CORP [US]) 2 August 2001 (2001-08-02) * abstract * * page 4, line 10 - line 15 * * page 12, line 11 - line 23 * * page 14, line 14 - line 21 * * page 17, line 15 - line 20 * ----- | 1-9 | |

TECHNICAL FIELDS
SEARCHED      (IPC)

The present search report has been drawn up for all claims

| Place of search | Date of completion of the search | Examiner |
|---|---|---|
| Munich | 27 April 2007 | Schreib, Franz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 06 30 1275

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2007

| Patent document cited in search report | | Publication date | Patent family member(s) | | Publication date |
|---|---|---|---|---|---|
| EP 1372342 | A | 17-12-2003 | JP | 3674606 B2 | 20-07-2005 |
| | | | JP | 2004015742 A | 15-01-2004 |
| | | | US | 2003227442 A1 | 11-12-2003 |
| EP 1237369 | A | 04-09-2002 | CA | 2368396 A1 | 28-08-2002 |
| | | | JP | 2002314938 A | 25-10-2002 |
| | | | US | 2002168069 A1 | 14-11-2002 |
| WO 0156279 | A | 02-08-2001 | AU | 3460001 A | 07-08-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05027529 A